# FASCICULE DE BREVET EUROPEEN

(11) **EP 1 071 008 B1**
(45) Date de publication et mention de la délivrance du brevet: **13.08.2003**
(21) Numéro de dépôt: 00401776.0
(22) Date de dépôt: 22.06.2000
(51) Int. Cl.: G06F 7/72

(54) **Procédé pour effectuer une multiplication avec accumulation dans un corps de Galois.**
Verfahren zur Durchführung einer Multiplikation mit Akkumulation in einem Galois-Feld
Method for performing multiplication with accumulation in a Galois field

(30) Priorité: 20.07.1999 FR 9909395
(43) Date de publication de la demande: 24.01.2001
(73) Titulaire: STMicroelectronics S.A., 92120 Montrouge (FR)
(72) Inventeur: Liardet, Pierre-Yvan, 7, rue Le Sueur, 75116 Paris (FR)
(74) Mandataire: Ballot, Paul

(56) Documents cités:
- EP-A- 0 265 336
- FR-A- 2 713 794
- US-A- 4 251 875
- US-A- 5 623 683
- SONG L ET AL: "LOW-ENERGY DIGIT-SERIAL/PARALLEL FINITE FIELD MULTIPLIERS" JOURNAL OF VLSI SIGNAL PROCESSING,NL,KLUWER ACADEMIC PUBLISHERS, DORDRECHT, vol. 19, no. 2, juillet 1998 (1998-07), pages 149-166, XP000782347 ISSN: 0922-5773

## Description

L'invention concerne un procédé pour effectuer une multiplication avec accumulation dans un corps de Galois. Plus particulièrement l'invention se rapporte à un procédé pour effectuer une multiplication avec accumulation dans un corps de Galois GF(2^{k}). GF(2^{k}) est le corps des polynômes de degré au plus k-1 à coefficients sur {0,1}. Les corps de Galois sont des ensembles finis d'éléments sur lesquels les opérations mathématiques sont définies différemment. Le corps de Galois GF (2^{k}) est un corps qui comporte k éléments, avec k = 2^{k}. Une représentation de ce corps est la représentation polynomiale. Tous les éléments s'expriment sous la forme d'un polynôme de degré k-1 : p (x) = aₖ₋₁ x^{k-1} + aₖ₋₂ x^{k-2} + ... a₂ x² + a₁x +a₀, avec a₁ un coefficient appartenant à GF (2), et donc égal soit à « 0 », soit à « 1 ». De ce fait, chaque élément peut être assimilé à un nombre codé sur K bits. Cela a pour effet que les calculs effectués sur les différents éléments correspondent à des calculs réalisés sur des polynômes réduits à l'aide d'un polynôme irréductible de degré K.

Les calculs effectués sur les nombres codés sur K bits représentant les éléments du corps se déroulent différemment des opérations d'addition et de multiplication usuelles. Ainsi, l'addition de 2 éléments se fait bit à bit à l'aide d'un circuit logique « ou exclusif ». La soustraction se fait de manière identique à une addition. La multiplication s'effectue en 2 temps : dans un premier temps on effectue une multiplication semblable à la multiplication de deux polynômes, puis dans un deuxième temps on effectue une réduction à l'aide d'un polynôme irréductible de degré k.

Les corps de Galois sont utilisés en transmission numérique pour réaliser soit des codes correcteurs d'erreurs, soit en tant que structure mathématique servant de support à l'implémentation d'un système de cryptographie. Parmi les codes de cryptage on peut citer le cryptage dit de courbe elliptique. Ce type de cryptage utilise des nombres binaires codés sur un grand nombre de bits (classiquement 150 à 200 bits). Les moyens de calculs utilisés à l'heure actuelle sont des processeurs classiques, éventuellement couplés avec des circuits dédiés. Si on utilise un processeur classique, le temps de calcul est difficilement optimisé. Par contre, l'utilisation de circuits dédiés est plus volumineuse et consomme plus d'énergie.

Une autre opération est fréquemment utilisée dans le corps de Galois : c'est une opération dite de multiplication avec accumulation, et qui est notée Xmac. Cette opération, qui nécessite trois données A, B et C, est définie de la façon suivante : Xmac (A,B,C) = A x B + C, où le symbole "x" est la multiplication au sens de l'arithmétique des polynômes à coefficient sur GF(2) et où le symbole "+" est l'addition au sens de l'arithmétique du corps de Galois.
Dans l'état de la technique, les données A, B et C sont des données codées sur un même nombre de bits. Ainsi si A et B sont codées sur n bits, un circuit électronique permettant de réaliser la multiplication au sens de l'arithmétique du corps de Galois comprend notamment n bascules d'accumulation, n additionneurs ... Ainsi, la taille des circuits permettant de réaliser des opérations dans le corps de Galois dépend directement de la taille en terme de nombre de bits des nombres intervenant dans les différentes opérations.

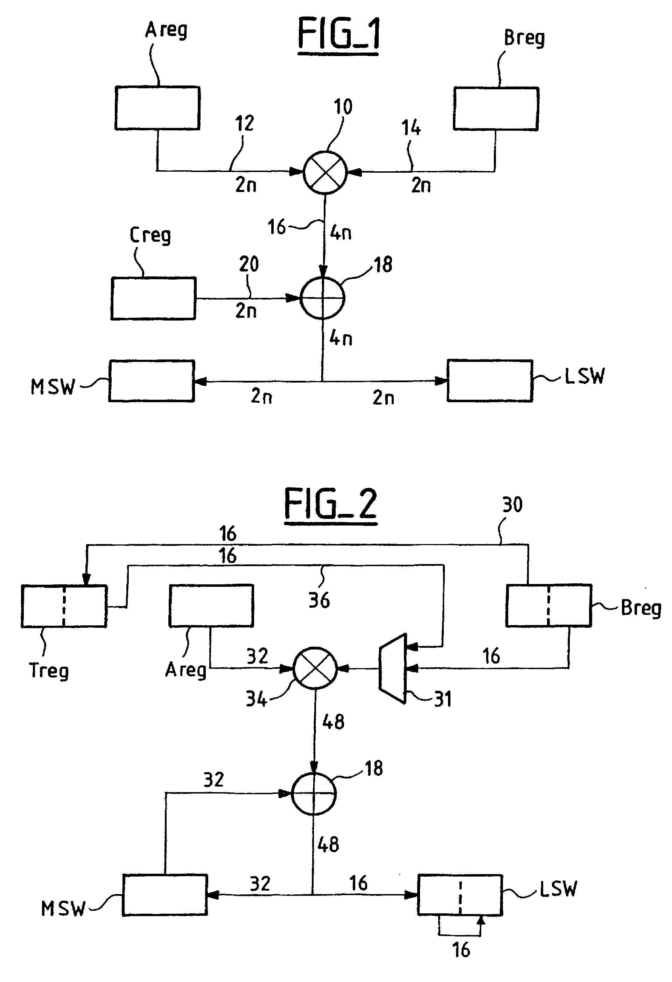

La figure 1 montre un schéma bloc exposant le déroulement d'une opération de multiplication avec accumulation dans un corps de Galois selon l'état de la technique. Comme il a été dit précédemment, dans une opération de multiplication avec accumulation trois données A B et C interviennent. La première donnée A est mémorisée dans un premier registre d'entrée Areg, la deuxième donnée B est mémorisée dans un deuxième registre d'entrée Breg et la troisième donnée C est mémorisée dans un troisième registre d'entrée Creg. Les données A, B et C ont une taille de 2 n bit. Les premier, deuxième et troisième registre d'entrée, respectivement Areg Breg et Creg sont de préférence des registres pouvant contenir 2 n bits. Ils peuvent cependant avoir une taille différente, la taille de ces registres devant cependant être suffisamment importante pour contenir les données A, B et C. Les différents registres peuvent appartenir à une unité mémoire commune ou à des unités mémoires différentes.

Un circuit de multiplication 10 dans un corps de Galois admet en entrée les données A et B qui sont respectivement transmises par un premier bus de données 12 et par un second bus de données 14 depuis les registres d'entrée Areg et Breg. Le circuit de multiplication dans le corps de Galois 10 effectue une multiplication selon l' arithmétique du Corps de Galois entre la première donnée A et la seconde donnée B. De tels circuits sont connus dans l'état de la technique. Le résultat de cette multiplication, disponible en sortie du circuit de multiplication 10, est un nombre codé sur 4 n bits. Ce résultat est transmis au moyen d'un troisième bus de données 16 vers un circuit logique 18. Le circuit logique 18 permet d'effectuer l'addition selon l'arithmétique du Corps de Galois entre le résultat de la multiplication dans le corps de Galois et la donnée C contenue dans le troisième registre Creg. A cet effet, un troisième bus de données 20 transmet les 2 n bits codant le nombre C au circuit logique 18. Dans la pratique, le circuit logique 18 est une porte "ou exclusif" à deux entrées.

Le résultat de l'addition au sens de l'arithmétique du corps de Galois effectuée par le circuit logique 18 *est* un nombre codé sur 4 n bits. Les 2n bits de poids faible du résultat de l'opération d'addition sont mémorisés dans un premier registre de sortie LSW (Less Signifiant Word dans la littérature anglaise) et les 2 n bits de poids fort du résultat de l'opération sont mémorisés dans un deuxième registre de sortie MSW (Most Significant Word dans la littérature anglaise).

Comme il a été dit précédemment, la taille du circuit de multiplication 10 dans le corps de Galois dépend directement de la taille des nombres qu'il doit multiplier. Or il est fréquent, par exemple pour des opérations de calcul de cryptage dit de courbes elliptiques, d'avoir à effectuer des multiplications entre des nombres codés sur 32 bits. La taille du circuit de multiplication 10 est alors très importante et la mise en oeuvre d'une telle opération devient trop coûteuse du fait de la taille du circuit de multiplication.

Le but de la présente invention est de proposer un procédé pour effectuer une opération de type multiplication avec accumulation dans un corps de Galois faisant intervenir un circuit de multiplication qui ne soit pas pénalisant en terme de taille, et donc de coût élevé.

A cet effet l'invention propose un chaînage particulier d'opérations successives qui permet de remplacer une multiplication entre 2 nombres de 2 n bits par 2 multiplications entre 1 nombre de 2 n bits et 1 nombre de n bits. Le circuit de multiplication qui est alors mis en oeuvre, et qui doit effectuer des multiplications entre un nombre de 2 n bits et un nombre de n bits voit ainsi sa taille approximativement divisée par 2. En effet, pour effectuer une telle multiplication, les 2 n bascules d'accumulation, les 2 n additionneurs etc... sont remplacés par n bascules d'accumulation et n additionneurs.
L'invention concerne donc un procédé pour effectuer une opération dans un corps de Galois de type multiplication avec accumulation faisant intervenir une première donnée, une deuxième donnée et une troisième donnée dans un corps de Galois, chacune des données étant codée sur 2 n bits, caractérisé en ce qu'il comporte les étapes consistant à :
- mémoriser la première donnée dans un premier registre d'entrée, la deuxième donnée dans un deuxième registre d'entrée, la troisième donnée dans un registre intermédiaire;
- effectuer une première multiplication au sens de l'arithmétique du corps de Galois au moyen d'un circuit multiplicateur entre la première donnée et les n bits de poids faible de la deuxième donnée pour obtenir un premier résultat intermédiaire codé sur 3 n bits ;
- effectuer une première addition au sens de l'arithmétique du corps de Galois au moyen d'un circuit logique entre la troisième donnée et le premier résultat intermédiaire pour obtenir un deuxième résultat intermédiaire sur 3 n bits ;
- mémoriser les 2 n bits de poids fort du deuxième résultat intermédiaire dans le registre intermédiaire, et les n bits de poids faible du deuxième résultat intermédiaire dans un registre de sortie;
- décaler les n bits de poids faible mémorisés dans le premier registre de sortie vers les bits de poids faible de ce premier registre de sortie;
- effectuer une deuxième multiplication au sens de l'arithmétique du corps de Galois au moyen du circuit multiplicateur entre la première donnée et les n bits de poids fort de la deuxième donnée pour obtenir un troisième résultat intermédiaire sur 3 n bits;
- effectuer une deuxième addition au sens de l'arithmétique du corps de Galois au moyen du circuit logique entre les 2 n bits de poids fort du deuxième résultat intermédiaire, mémorisés dans le registre intermédiaire, et le troisième résultat intermédiaire pour obtenir un quatrième résultat intermédiaire codé sur 3 n bits ;
- mémoriser les 2 n bits de poids fort du quatrième résultat intermédiaire dans le registre intermédiaire et les n bits de poids faible dans le registre de sortie.

Selon un mode de mise en oeuvre préféré de l'invention, les bits de poids fort de la deuxième donnée sont transférés vers un registre cible. Les bits de poids fort de la deuxième donnée sont alors directement accessibles pour la deuxième multiplication intervenant dans le procédé selon l'invention depuis le registre cible en sortie d'un multiplexeur à deux entrées qui reçoivent respectivement les bits de poids faible du deuxième registre d'entrée et les données du registre cible.

Selon un mode de réalisation préféré de l'invention, le circuit logique utilisé pour réaliser les additions dans le Corps de Galois est une porte "ou exclusif" à deux entrées.

Les différents aspects et avantages de l'invention apparaîtront plus clairement dans la suite de la

Description en référence aux figures qui ne sont données qu'à titre indicatif et nullement limitatif de l'invention. En particulier, le procédé selon l'invention sera décrit pour la multiplication avec accumulation de nombres codés sur 32 bits (cas où n = 16), cette caractéristique ne devant pas apparaître comme limitative de la portée du procédé selon l'invention.
- La figure 1, déjà décrite, montre un schéma du déroulement d'une opération de multiplication avec accumulation dans un corps de Galois selon l'état de la technique.
- La figure 2 montre le déroulement d'une opération de multiplication avec accumulation dans un corps de Galois selon le procédé de l'invention.
- La figure 3 est une représentation schématique d'un chaînage de deux opérations de multiplication avec accumulation selon l'invention.

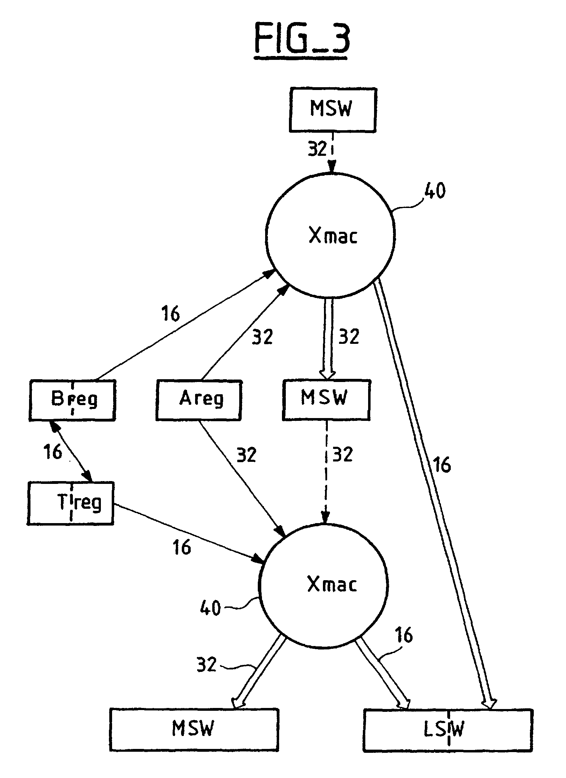

La figure 2 présente certains éléments similaires à des éléments présentés lors de la description de la figure 1. Ces éléments communs seront désignés par les mêmes références. Ainsi, la figure 2 montre un premier registre d'entrée Areg et un deuxième registre d'entrée Breg, destinés à recevoir respectivement une première donnée A et une deuxième donnée B codées sur 32 bits. Comme sur la figure 1, les nombres associés aux différents bus correspondent aux nombres de bits mis en jeu pour chaque opération correspondante. Un bus de données 30 relie le deuxième registre Breg vers le registre cible Treg.

Un multiplexeur 31 reçoit à ses deux entrées d'une part des bits issus du registre cible Treg et d'autre part des données issues du deuxième registre d'entrée Breg. La sortie du multiplexeur 31 est connectée à un circuit de multiplication 34 qui effectue des multiplications au sens de l'arithmétique du corps de Galois. Le circuit de multiplication 34 admet à une seconde entrée les données issues du premier registre d'entrée Areg.

Un circuit logique 18 admet à une première entrée les données issues du circuit de multiplication 34 et à une seconde entrée des données issues d'un registre intermédiaire MSW. Les données issues du circuit logique 18 sont réparties entre le registre MSW et un registre de sortie LSW.

Le procédé selon l'invention est mis en oeuvre de la façon suivante : les trois données A, B et C sont respectivement mémorisées dans le premier registre d'entrée Areg, dans le deuxième registre d'entrée Breg, et dans le registre intermédiaire MSW.

Dans une première étape, les 32 bits de la première donnée A sont multipliés au sein du circuit de multiplication 34 par les 16 bits de poids faible de la deuxième donnée B. Simultanément, les 16 bits de poids fort de la deuxième donnée B sont transférés au moyens du bus de données 30 vers les bits de poids faible du registre cible Treg. Le résultat de la multiplication effectuée entre les 32 bits de la première donnée A et les 16 bits de poids faible de la deuxième donnée B procure un premier résultat intermédiaire codé sur 48 bits.

Dans une deuxième étape, le circuit logique 18 permet d'effectuer une addition au sens de l'arithmétique de Galois entre le premier résultat intermédiaire et la troisième donnée C mémorisée dans le registre intermédiaire MSW. On obtient ainsi un deuxième résultat intermédiaire codé sur 48 bits en sortie du circuit logique 18. Les 32 bits de poids fort du deuxième résultat intermédiaire sont mémorisés dans le registre intermédiaire MSW, tandis que les 16 bits de poids faible du deuxième résultat intermédiaire sont mémorisés dans le registre de sortie LSW. Selon les procédés habituels d'écriture dans des registres, les 16 bits de poids faible du deuxième résultat intermédiaire sont automatiquement mémorisés dans les 16 bits de poids fort du registre de sortie LSW.

Dans une troisième étape, les 16 bits de poids faible du deuxième résultat intermédiaire sont décalés vers les bits de poids faible du registre de sortie LSW.

Dans une quatrième étape, les 32 bits de la première donnée A sont multipliés par les 16 bits de poids fort de la deuxième donnée B au sein du circuit de multiplication 34. Un troisième résultat intermédiaire codé sur 48 bits est ainsi obtenu en sortie du circuit de multiplication 34.

Dans une cinquième étape, le troisième résultat intermédiaire est additionné au sein du circuit logique 18 au contenu du registre intermédiaire MSW codé sur 32 bits. Un quatrième résultat intermédiaire codé sur 48 bits est ainsi obtenu en sortie du circuit logique 18. Dans une sixième étape, les 32 bits de poids fort de ce quatrième résultat intermédiaire sont mémorisés dans le registre intermédiaire MSW et les 16 bits de poids faible du quatrième résultat intermédiaire sont mémorisés dans les bits de poids fort du registre LSW. Le résultat de l'opération Xmac (A, B ,C) = A x B + C est alors entièrement contenu dans les registres MSW et LSW. Ce résultat sur 64 bits admet ses 32 bits de poids fort dans le registre MSW et ses 32 bits de poids faible dans le registre intermédiaire de sortie LSW.

Lors de la deuxième multiplication effectuée, soit à la quatrième étape, les 16 bits de poids fort de la deuxième donnée B sont transmis au circuit de multiplication 34 via un bus de données supplémentaire 36 qui relie le registre cible Treg et une entrée du multiplexeur 31, et via le multiplexeur 31. L'intérêt de procéder ainsi est le suivant : les 16 bits de poids fort de la deuxième donnée B étant mémorisés dans les 16 bits de poids faible du registre Treg, ils sont directement accessibles par le circuit de multiplication 34. Au contraire, si on accédait au 16 bits de poids fort de la deuxième donnée B directement depuis le deuxième registre Breg, un ou plusieurs cycle(s) d'une horloge régissant les différentes opérations seraient nécessaires avant que le circuit de multiplication 34 n'accède effectivement aux 16 bits de poids fort de la deuxième donnée B contenus dans le deuxième registre Breg.

Le procédé selon l'invention peut néanmoins fonctionner sans l'intervention du registre Treg mais l'exécution d'une multiplication avec accumulation selon le procédé de l'invention est alors plus lente pour les motifs qui viennent d'être exposés.

Les registres Areg, Breg , Treg, MSW et LSW sont de préférence des registres pouvant contenir 32 bits. Ils peuvent cependant être d'une taille supérieure. Les données qui sont successivement écrites dans le registre intermédiaire MSW effacent les données précédentes de ce registre.

Bien évidemment, le procédé selon l'invention peut également être mis en place pour la réalisation d'une simple multiplication au sens de l'arithmétique de Galois. En effet, une simple multiplication correspond au cas d'une multiplication avec accumulation où la donnée C est nulle.

La figure 3 met en évidence le chaînage de deux opérations de multiplication avec accumulation que met en oeuvre le procédé selon l'invention pour aboutir au même résultat de multiplication avec accumulation que peut proposer l'état de la technique.
Sur cette figure, les cercles 40 représentent des circuits électroniques permettant de réaliser des opérations de multiplication avec accumulation où l'un des deux facteurs de la multiplication est codé sur 16 bits, l'autre facteur de la multiplication est codé sur 32 bits et où la donnée additionnée est codée sur 32 bits. Comme à la figure 2, les données A, B et C sont initialement mémorisés dans les registres Areg Breg et MSW.

Sur cette troisième figure, des flèches en traits pleins issues des différents registres et qui sont orientées vers les opérations de multiplication avec accumulation indiquent que les données issues de ces registres seront multipliées au sein de l'opération de multiplication avec accumulation. Les données issues des registres d'où partent des flèches en pointillés seront additionnées au sein de l'opération de multiplication avec accumulation. Les flèches doubles issues des opérations de multiplication avec accumulation sont les résultats issus de ces opérations de multiplication avec accumulation. Les flèches bidirectionnelles indiquent un échange de données entre deux registres. Les nombres associés aux différentes flèches correspondent au nombre de bits mis en jeu pour chaque opération correspondante.

Ainsi, sur cette figure, on voit bien que les 32 bits de la première donnée A sont multipliés aux 16 bits de poids faible de la deuxième donnée B, le résultat de cette multiplication étant additionné aux 32 bits de la donnée C pour fournir un résultat mémorisé dans le registre intermédiaire MSW pour les 32 bits de poids fort et dans le registre de sortie LSW pour les 16 bits de poids faible. La deuxième opération de multiplication avec accumulation mise en jeu fait intervenir les 32 bits de la donnée A, multipliés par les 16 bits de poids fort de la donnée B qui ont été précédemment transférés dans le registre cible Treg, ainsi que les 32 nouveaux bits du registre MSW qui interviennent dans l'addition de l'opération de multiplication avec accumulation. Le résultat de la deuxième multiplication avec accumulation est mémorisé dans le registre intermédiaire MSW pour les 32 bits de poids fort, et dans les 16 bits de poids fort du registre intermédiaire LSW pour les 16 bits de poids faible.

Le résultat final de l'opération Xmac (A, B, C) est la concaténation du contenu du registre MSW, des 16 bits de poids forts du registre LSW et des 16 bits de poids faible du registre LSW issus de la première opération de multiplication avec accumulation.

Ainsi, d'une façon générale, le procédé selon l'invention permet de réaliser une opération de multiplication avec accumulation dans le corps de Galois entre nombres codés sur 2 n bits en proposant un enchaînement astucieux d'opérations identiques, et notamment deux multiplications entre un nombre codé sur 2 n bits et un nombre codé sur n bits, ce qui permet d'avoir des circuits multiplicateurs moins encombrants.

## Revendications

1. Procédé pour effectuer une opération dans un Corps de Galois de type multiplication avec accumulation faisant intervenir une première donnée, une deuxième donnée et une troisième donnée dans un corps de Galois, chacune des données étant codée sur 2 n bits, **caractérisé en ce qu'**il comporte les étapes consistant à :
- mémoriser la première donnée dans un premier registre d'entrée, la deuxième donnée dans un deuxième registre d'entrée, la troisième donnée dans un registre intermédiaire ;
- effectuer une première multiplication au sens de l'arithmétique du Corps de Galois au moyen d'un circuit multiplicateur entre la première donnée et les n bits de poids faible de la deuxième donnée pour obtenir un premier résultat intermédiaire codé sur 3 n bits ;
- effectuer une première addition au sens de l'arithmétique du Corps de Galois au moyen d'un circuit logique entre la troisième donnée et le premier résultat intermédiaire pour obtenir un deuxième résultat intermédiaire sur 3 n bits ;
- mémoriser les 2 n bits de poids fort du deuxième résultat intermédiaire dans le registre intermédiaire, et les n bits de poids faible du deuxième résultat intermédiaire dans un registre de sortie ;
- décaler les n bits de poids faible mémorisés dans le premier registre de sortie vers les bits de poids faible de ce premier registre de sortie ;
- effectuer une deuxième multiplication au sens de l'arithmétique du corps de Galois au moyen du circuit multiplicateur entre la première donnée et les n bits de poids fort de la deuxième donnée pour obtenir un troisième résultat intermédiaire sur 3 n bits ;
- effectuer une deuxième addition au sens de l'arithmétique du corps de Galois au moyen du circuit logique entre les 2 n bits de poids fort du deuxième résultat intermédiaire, mémorisés dans le registre intermédiaire, et le troisième résultat intermédiaire pour obtenir un quatrième résultat intermédiaire codé sur 3n bits ;
- mémoriser les 2 n bits de poids fort du quatrième résultat intermédiaire dans le registre intermédiaire et les n bits de poids faible dans le registre de sortie.

2. Procédé selon la revendication 1 **caractérisé en ce que** les bits de poids fort de la deuxième donnée (B) sont transférés vers un registre cible (Treg), d'où ils sont accessibles via un bus de données (36) et un multiplexeur (31) pour la deuxième multiplication.

3. Procédé selon l'une des revendications précédentes **caractérisé en ce que** la première donnée (A), la deuxième donnée (B) et la troisième donnée (C) sont codées sur 32 bits.

4. Procédé selon l'une des revendications précédentes **caractérisé en ce que** le circuit logique (18) permettant d'effectuer la première addition et la deuxième addition est une porte ou exclusif.

5. Procédé selon l'une des revendications précédentes **caractérisé en ce que** la troisième donnée (C) est nulle.

## Patentansprüche

1. Verfahren zur Durchführung einer Operation des Typs "Multiplikation mit Akkumulation" innerhalb eines Galois-Körpers, die auf ein erstes Datum, auf ein zweites Datum und auf ein drittes Datum innerhalb eines Galois-Körpers zugreifen kann, wobei jedes Datum mit 2 · n Bits kodiert ist, **dadurch gekennzeichnet, daß** es die Schritte umfaßt:
- Speichern des ersten Datums in einem ersten Eingangsregister, des zweiten Datums in einem zweiten Eingangsregister und des dritten Datums in einem Zwischenregister;
- Durchführen einer ersten Multiplikation des ersten Datums mit den n niedrigwertigen Bits des zweiten Datums mittels eines Multiplikationsschaltkreises und gemäß der Arithmetik des Galois-Körpers, um ein erstes Zwischenergebnis zu erhalten, das mit 3 · n Bits kodiert ist;
- Durchführen einer ersten Addition des dritten Datums und des ersten Zwischenergebnis mittels eines Logikschaltkreises und gemäß der Arithmetik des Galois-Körpers, um ein zweites Zwischenergebnis zu erhalten, das mit 3 · n Bits codiert ist;
- Speichern der 2 · n hochwertigen Bits des zweiten Zwischenergebnis in dem Zwischenregister und der n niedrigwertigen Bits des zweiten Zwischenergebnisses in einem Ausgangsregister;
- Verschieben der n niedrigwertigen in dem ersten Ausgangsspeicher gespeicherten Bits in die niedrigwertigen Bits des ersten Ausgangsregisters;
- Durchführen einer zweiten Multiplikation des ersten Datums mit den n hochwertigen Bits des zweiten Datums mittels des Multiplikationsschaltkreises und gemäß der Arithmetik des Galois-Körpers, um ein drittes Zwischenergebnis zu erhalten, das mit 3 · n Bits codiert ist;
- Durchführen einer zweiten Addition der 2 · n hochwertigen Bits des zweiten in dem Zwischenspeicher gespeicherten Zwischenergebnisses und des dritten Zwischenergebnis mittels des Logikschaltkreises und gemäß der Arithmetik des Galois-Körpers, um ein viertes Zwischenergebnis zu erhalten, das mit 3 · n Bits codiert ist;
- Speichern der 2 · n hochwertigen Bits des vierten Zwischenergebnis in dem Zwischenregister und der 2 · n niedrigwertigen Bits in dem Ausgangsregister.

2. Verfahren nach Anspruch 1, **dadurch gekennzeichnet, daß** die hochwertigen Bits des zweiten Datums (B) in ein Zielregister (Treg) übertragen werden, wo diese über einen Datenbus (36) und einen Multiplexer (31) für die zweite Multiplikation zur Verfügung stehen.

3. Verfahren nach einem der vorangegangenen Ansprüche, **dadurch gekennzeichnet, daß** das erste Datum (A), das zweite Datum (B) und das dritte Datum (C) mit 32 Bit kodiert sind.

4. Verfahren nach einem der vorangegangenen Ansprüche, **dadurch gekennzeichnet, daß** der Logikschaltkreis (18), welcher die Durchführung der ersten und der zweiten Addition gestattet, ein XOR-Gatter (exklusiv-ODER) ist.

5. Verfahren nach einem der vorangegangenen Ansprüche, **dadurch gekennzeichnet, daß** das dritte Datum (C) null ist.

## Claims

1. Method for performing an operation in a multiplication-accumulation-type Galois field utilising a first data item, a second data item and a third data item in a Galois field, each of the data items being coded on 2 n bits, **characterised in that** it comprises the steps consisting in:
- memorising the first data item in a first input register, the second data item in a second input register, the third data item in an intermediate register;
- performing a first multiplication within the meaning of Galois field arithmetic by means of a multiplier circuit between the first data item and the n least significant bits of the second data item in order to obtain a first intermediate result coded on 3 n bits;
- performing a first addition within the meaning of Galois field arithmetic by means of a logic circuit between the third data item and the first intermediate result in order to obtain a second intermediate result on 3 n bits;
- memorising the 2 n most significant bits of the second intermediate result in the intermediate register, and n least significant bits of the second intermediate result in an output register;
- shifting the n least significant bits memorised in the first output register towards the least significant bits of this first output register;
- performing a second multiplication within the meaning of Galois field arithmetic by means of the multiplier circuit between the first data item and the n most significant bits of the second data item in order to obtain a third intermediate result on 3 n bits;
- performing a second addition within the meaning of Galois field arithmetic by means of the logic circuit between the 2 n most significant bits of the second intermediate result, memorised in the intermediate register, and the third intermediate result in order to obtain a fourth intermediate result coded on 3n bits;
- memorising the 2 n most significant bits of the fourth intermediate result in the intermediate register and the n least significant bits in the output register.

2. Method according to Claim 1 **characterised in that** the most significant bits of the second data item (B) are transferred to a target register (Treg), from where they are accessible via a data bus (36) and a multiplexer (31) for the second multiplication.

3. Method according to one of the preceding claims **characterised in that** the first data item (A), the second data item (B) and the third data item (C) are coded on 32 bits.

4. Method according to one of the preceding claims **characterised in that** the logic circuit (18) making it possible to carry out the first addition and the second addition is an exclusive OR port.

5. Method according to one of the preceding claims **characterised in that** the third data item (C) is zero.
